# FASCICULE DE BREVET EUROPEEN

(11) **EP 0 561 720 B1**
(45) Date de publication et mention de la délivrance du brevet: **23.12.1998**
(21) Numéro de dépôt: 93420117.9
(22) Date de dépôt: 16.03.1993
(51) Int. Cl.: B01J 2/12, B01F 9/08

(54) **Procédé et appareil de traitement de particules**
Verfahren und Vorrichtung zur Behandlung von Teilchen
Process and apparatus for treating particles

(30) Priorité: 17.03.1992 FR 9203424
(43) Date de publication de la demande: 22.09.1993
(73) Titulaire: RHONE-POULENC AGRO, 69009 Lyon (FR)
(72) Inventeur: Bourreau, Frank-Yann, F-91870 Boissy le Sec (FR); Seimandi, Christophe, F-91180 St Germain les Arpajon (FR)
(74) Mandataire: Chrétien, François

(56) Documents cités:
- CH-A- 661 669
- DE-C- 922 267
- DE-U- 9 107 415
- FR-A- 1 459 246
- US-A- 2 999 293
- US-A- 5 094 604

## Description

La présente invention concerne un procédé de traitement en continu de particules au moyen d'un agent de traitement ainsi qu'un dispositif pour la mise en oeuvre de ce procédé.

Le brevet FR-A-1 459 246 décrit un appareil d'enrobage de solides (granulés d'engrais) avec un autre solide, sous forme de poudre, dans un tambour rotatif, sur la surface interne duquel est fixée une vis hélicoïdale. Ainsi la vis tourne solidairement avec le tambour. De plus tous les ingrédients, granulés et poudre sont versés ensemble et en une fois par l'orifice d'entrée du tambour.

La demande DE-U-91 07415 décrit un appareil de mélange de deux solides, l'un sous forme grossière et l'autre sous forme plus fine, à l'aide d'une vis tournant au fond d'un tambour lui même rotatif.

Il est également connu de traiter des particules en continu au moyen d'un agent de traitement solide ou liquide de manière à les enrober ou les pelliculer pour diverses applications. Le problème à résoudre dans ce type de technique réside dans le souhait à la fois d'obtenir un traitement le plus uniforme et régulier possible et d'effectuer le traitement dans des conditions économiquement satisfaisantes.

Dans ce domaine, on a proposé des procédés et appareils, dans lesquels on fait progresser les particules, ainsi que l'agent de traitement préalablement apporté avec les particules, au fond d'une auge fixe à l'aide d'une brosse longitudinale coaxiale au fond de l'auge et tangente par au moins une de ses génératrices au fond de la dite auge. Si cette technique apporte une amélioration par rapport aux techniques antérieures, elle a néanmoins l'inconvénient de ne pas offrir une répartition suffisamment uniforme de l'agent de traitement sur les particules et de nécessiter un matériel relativement long pour obtenir un effet suffisant.

On a proposé plus récemment un autre dispositif, dans lequel la partie principale est un tambour à rotation lente, dans lequel est introduite une brosse, d'axe parallèle mais excentrée, et rotative dans un sens opposé à celui de la rotation du tambour, de manière à donner une meilleure agitation au particules et améliorer encore l'uniformité du recouvrement des particules.

Cependant ces techniques restent encore insuffisantes, lorsqu'on veut une qualité de haut niveau du recouvrement alliée à une productivité élevée.

La présente invention a pour but de remédier à ces inconvénients et de proposer un procédé et un dispositif de traitement en continu de particules alliant à la fois une excellente qualité de recouvrement et une productivité améliorée.

Plus particulièrement l'invention a d'abord pour objet un procédé de traitement en surface en continu de particules en mouvement au moyen d'un agent de traitement apporté simultanément et en continu, caractérisé en ce que:
- les particules sont sous forme de volumes élémentaires en mouvement principal de translation longitudinale continu piston, les particules de chaque volume étant soumis en outre et simultanément à au moins un mouvement de rotation en direction transversale de celle du mouvement principal, et au moins un mouvement vertical dans un espace élémentaire, dont toutes les parois en contact avec les particules sont mobiles en continu, l'espace étant défini par au moins une paroi principale cylindrique ou polygonale d'un tambour, en rotation lente autour d'un axe longitudinal et au moins deux parois secondaires, sensiblement parallèles entre elles, se déplaçant de manière rectiligne dans le sens du mouvement principal de translation.

Les parois secondaires sont constituées, deux par deux, par deux parties homologues successives, dans le sens de leur progression, de deux hélices à axes parallèles à celui de la paroi principale rotative, les deux hélices tournant en sens contraire.

Selon une variante préférée, les parois secondaires sont constituées par les parois intérieures des pas des brosses.

L'agent de traitement peut être solide, par exemple une poudre, ou liquide, par exemple une solution, émulsion dispersion notamment de matières filmogènes et/ou de matières adhésives, et peut être amené sur les noyaux élémentaires par tout moyen convenable situé à l'intérieur du tambour tel que déversoir ou bande transporteuse inclinée, dans le cas d'un solide, ou une ou plusieurs rampes de pulvérisation dans le cas d'un liquide. De manière préférée, pour assurer à la sortie du tambour une bonne qualité de traitement, l'agent de traitement est appliqué sur les noyaux élémentaires, dans la première partie de leur trajet de translation sur la paroi principale.

Les particules sont amenées et versées à l'entrée du tambour cylindrique par tout dispositif convenable tel que déversoir ou bande transporteuse incliné et peuvent avoir subi un prétraitement comme par exemple une humidification ou l'apport d'une substance liante. De préférence ce prétraitement peut être réalisé dans un dispositif selon l'invention.

A la sortie de tambour de traitement les particules traitées peuvent être évacuées par tout dispositif convenable comme par exemple une bande transporteuse pour être directement stockées. De préférence cette bande transporteuse fait partie de ou alimente une unité de séchage de préférence en continu.

Le procédé selon l'invention est applicable à toutes sortes de particules telles que par exemple semences, noyaux pour bonbons, dragées, cachets, biscuits et analogues et plus généralement à toutes les particules de dimensions moyennes allant de quelques mm à 3 cm.

L'invention a également pour objet un dispositif pour le traitement de particules au moyen d'un agent de traitement, caractérisé en ce qu'il comprend un tambour longitudinal, rotatif autour d'un axe sensiblement horizontal, dans lequel progressent d'un bout à l'autre les particules amenées en continu à l'entrée du tambour par un dispositif distributeur, et dans l'espace duquel se trouvent:
a) au moins deux hélices rotatives autour d'axes parallèles à celui du tambour, au moins l'une tournant dans le même sens et les autres en sens contraire,
b) au moins un dispositif d'alimentation comprenant une rampe d'alimentation, dont l'axe est sensiblement horizontal et parallèle à celui du tambour, associée à au moins un répartiteur de l'agent de traitement sur les particules en mouvement, sur toute la zone de traitement du tambour.

Par "sensiblement horizontal" au sens de l'invention on entend une direction faisant avec l'horizontale un angle d'au plus 30°.

Le tambour est habituellement un cylindre éventuellement perforé, de section circulaire ou polygonale.

De préférence, la rampe d'alimentation est située au dessus du plan des axes des hélices longitudinales. Le répartiteur de l'agent de traitement peut être une buse de pulvérisation, si l'agent de traitement est liquide ou un distributeur de solide par exemple si l'agent est une poudre.

De préférence, les hélices sont constituées par des brosses hélicoïdales.

Le dispositif selon l'invention peut être inclus dans une ligne de traitement des particules comprenant habituellement un dispositif de transport en continu pour évacuer les particules traitées. Le dispositif de transport peut être associé ou faire partie d'une unité de séchage des particules traitées.

Le procédé selon l'invention et le dispositif pour sa mise en oeuvre seront mieux compris à l'aide des figures ci-jointes :
- la figure 1 représente un schéma d'ensemble d'une unité de traitement comprenant un mode de réalisation du dispositif selon l'invention;
- la figure 2 est une coupe transversale d'une vue en élévation d'un mode de réalisation de l'invention;
- la figure 3 est coupe transversale d'une une vue de face du dispositif selon la figure 2.

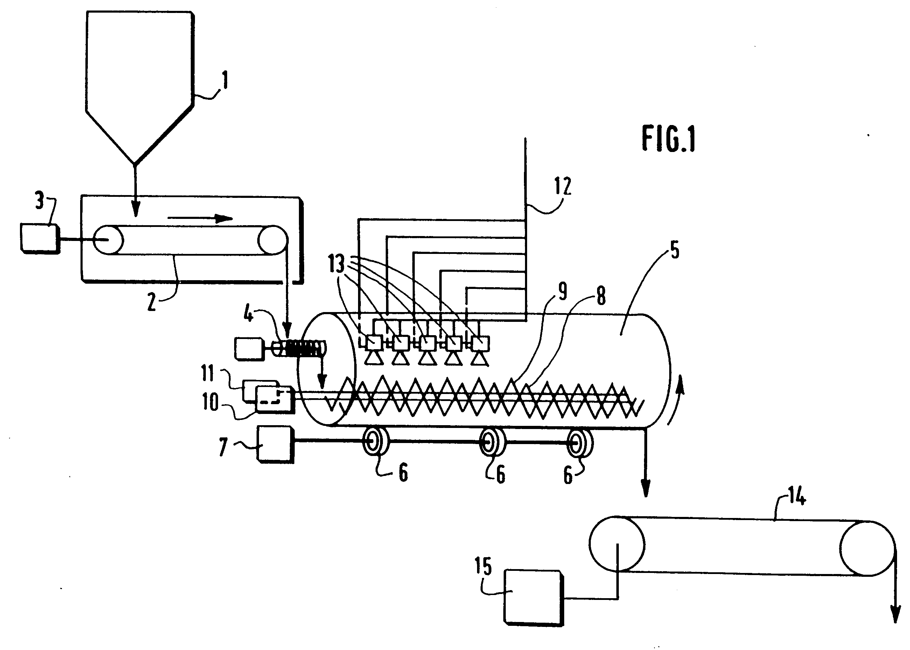

L'ensemble représenté à la figure 1 comprend un dispositif 1 de stockage des particules à traiter. Celles ci sont déversées par gravité sur une bande transporteuse doseuse 2 entraînée, vers la droite, par un moteur 3 et régulée, qui emmène les particules et les fait tomber dans un déversoir 4, qui à son tour déverse les particules à l'entrée et à l'intérieur d'un tambour cylindrique 5, tournant, dans le sens indiqué par la flèche, sur des galets 6, entraînés autour d'un axe commun par un moteur 7. Le cylindre est sensiblement horizontal, c'est à dire comme ici horizontal mais peut être notamment incliné vers le haut jusqu'à environ 30°, dans le sens de progression des particules.

A l'intérieur du cylindre et dans sa partie basse sont installées deux brosses hélicoïdales 8 et 9 à axes parallèles à celui du cylindre et montées rotatives, entraînées respectivement par un moteur 10 et 11, de manière tangentielle selon au moins une génératrice à un génératrice du cylindre et que la brosse 8 tourne dans le même sens que le cylindre et la brosse 9 tourne en sens inverse. Les vitesses respectives sont choisies de manière que les particules parcourant le fond du cylindre en rotation sont renvoyées d'une brosse à l'autre en créant entre les surfaces intérieures de leur pas respectif et la paroi rotative du cylindre des volumes élémentaires de particules soumises à une translation le long du cylindre et des mouvements faisant tourner ces particules sur toutes leur faces.

Toujours à l'intérieur du tambour mais située au dessus des brosses est monté un dispositif d'alimentation comprenant une rampe d'alimentation 12 en un agent de traitement liquide associée à une série de buses de pulvérisation 13. L'ensemble est disposé longitudinalement sensiblement parallèle à l'axe du cylindre. Lorsque les particules passent dans la zone de traitement du cylindre les buses projettent l'agent de traitement sur elles, donc dans le cas de la figure vers le bas. Du fait du mouvement décrit ci-dessus des particules, l'agent de traitement se répartit sur toute leur surface d'une manière particulièrement homogène.

Les particules peuvent alors quitter directement le cylindre ou ne le quitter qu'après passage dans une prolongation du tambour non munie d'un dispositif de distribution d'agent de traitement, ce qui a pour effet de parfaire l'homogénéité de recouvrement des particules. Cependant cet effet peut être également obtenu par passage des particules traitées dans un système analogue ou différent de brassage et de transport en continu.

A la sortie, les particules traitées sont déversées ou reprises par une bande transporteuse 14 entraînée par un moteur 15 qui peut les convoyer directement vers une unité de conditionnement ou, si un séchage est nécessaire, vers une unité de séchage de préférence en continu. De manière avantageuse la bande transporteuse fait elle même partie d'un séchoir en continu, ce qui permet d'avoir une installation complète particulièrement compacte et productive.

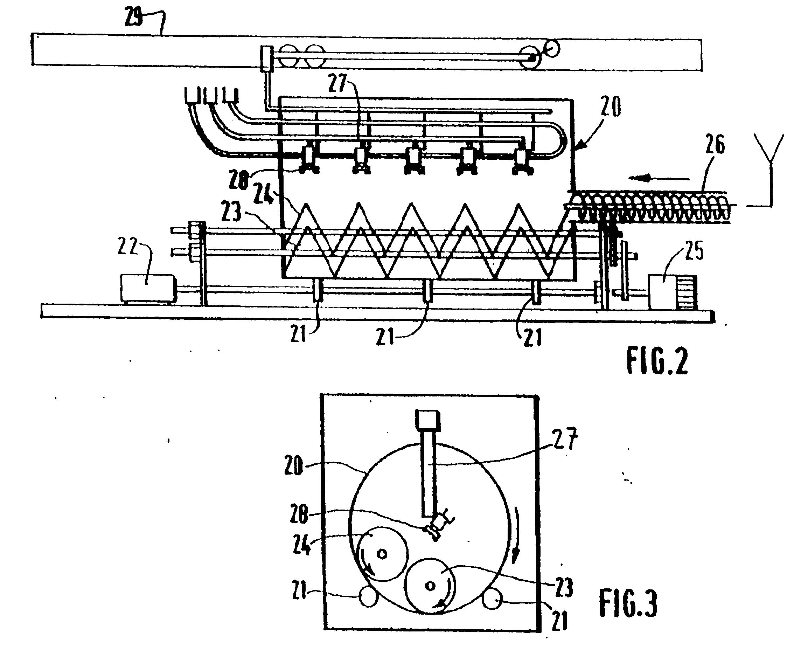

La figure 2 représente une vue de profil d'un mode de réalisation préférée de l'invention. Le cylindre 20 est entraîné en rotation par les galets 21, eux mêmes entraînés par le moteur 22. Les brosses 23 et 24 sont entraînées par un moteur commun 25 mais, par un jeu de pignons, en sens différent, la brosse 23 tournant dans le même sens que le cylindre et la brosse 24 en sens contraire. Les particules sont amenées en continu par la vis 26,dans le sens indiqué par la flèche, vers la gauche. Enfin, dans la partie haute du cylindre et pratiquement sur toute sa longueur, est montée une rampe d'alimentation 27 associée à une série de buses 28, l'ensemble étant monté coulissant par liaison solidaire avec un chariot mobile 29. Cette disposition permet un accès et un nettoyage plus faciles des éléments du dispositif.

La figure 3 est une vue de face schématique partielle de la figure 2, c'est à dire sans les moteurs ni le chariot coulissant. Le cylindre 28 est rotatif sur les galets 21. Les brosses 23 et 24 tournent respectivement dans le même sens et dans le sens contraire à celui du cylindre. Dans la partie haute est disposée la rampe d'alimentation 27 associée à la buse 28.

Sans qu'il soit nécessaire d'entrer dans les détails, il est clair que le mouvement de tous les éléments du dispositif décrit ci-dessus sont équipés de dispositifs de régulations, non décrits, de manière à assurer un débit d'agent de traitement régulier et connecté avec la vitesse de progression des particules dans le cylindre ainsi que leur mouvements transversaux obtenus par le réglage des vitesses respectives des brosses, de manière à créer des volumes élémentaires de particules en mouvement, de sorte que leur surface soit le plus souvent possible dans la zone où est projeté l'agent de traitement et tournée vers la buse.

L'exemple suivant relatif à une opération de traitement de semences en continu permet d'illustrer les avantages du procédé selon l'invention en ce qui concerne la qualité de recouvrement des graines et la productivité du procédé.

### EXEMPLE:

Un lot de 24 tonnes de maïs, nettoyé et criblé, est pesé en continu de manière à obtenir un débit constant, par régulation, de 12 t/heure, et introduit en continu dans un cylindre horizontal, par une extrémité, de diamètre 600 mm et de 1 m de longueur. Le cylindre, vu de l'entrée, tourne dans le sens des aiguilles d'une montre à une vitesse de 80 tr/mn . Toutes les vitesses sont maintenues constantes.

Le cylindre est équipé, dans sa partie basse (cf. fig. 3), de deux brosses à axes longitudinaux parallèles à celui du cylindre, en polyamide, de pas de 100mm et de diamètre 200mm et tangentes entre elles. Vues entrée semences, elles tournent respectivement à 180 tr/mn pour celle de droite et à 100 tr/mn pour celle de gauche, de sorte que la brosse de droite ramène au centre les semences entraînées par le cylindre. Les pas des brosses et la paroi du cylindre tournant forment ainsi des espaces, en contact avec les semences, à parois mobiles qui mélangent les semences en paquets et les entraînent vers la sortie du cylindre, avec une répartition du temps de séjour très bien contrôlée.

Simultanément, sur l'écoulement du flux de semences dans le bas du cylindre, est pulvérisée une bouillie constituée d'une suspension à base d'une matière polymère filmogène, contenant un colorant et une matière fongicide, ainsi que des adjuvants de formulation "de composition (pour 1 litre):
- alcool polyvinylique: 20 g
- argile broyée: 200 g
- Rouge Basoflex 3855 (marque déposée): 20 ml
- thirame (fongicide): 100 g
en continu par cinq buses, alimentées par une rampe située au-dessus des brosses. Ainsi l'agent de traitement arrive sur la surface présentée et renouvelées des semences. Le débit cumulé dans les cinq buses est réglé à 120 l/heure de manière à appliquer 0,02 l de bouillie par kg de semences. Le traitement de 24 tonnes est effectué en deux heures. Les semences ainsi traitées ressortent humides, avec une humidité ne nuisant pas à leur conservation ni à leurs propriétés biologiques, et présentant un aspect de couverture très régulier.

## Revendications

1. Procédé de traitement en surface en continu de particules en mouvement au moyen d'un agent de traitement apporté simultanément et en continu, caractérisé en ce que:
- les particules sont réparties sous forme de volumes élémentaires en mouvement principal de translation longitudinale continu piston, les particules de chaque volume étant soumis en outre et simultanément à au moins un mouvement de rotation en direction transversale de celle du mouvement principal, et au moins un mouvement vertical dans un espace élémentaire, dont toutes les parois en contact avec les particules sont mobiles en continu, l'espace étant défini par au moins une paroi principale cylindrique ou polygonale d'un tambour, en rotation lente autour d'un axe longitudinal et au moins deux parois secondaires, se déplaçant de manière rectiligne dans le sens du mouvement principal de translation, les parois secondaires étant constituée deux par deux, par deux parties homologues successives de deux hélices à axes parallèles à celui de la paroi principale rotative, les deux hélices tournant en sens contraire.

2. Procédé selon la revendication selon la revendication 1, caractérisé en ce que l'apport d'agent de traitement se fait par pulvérisation.

3. Procédé selon l'une des revendications 1 à 2, caractérisé en ce que les parois secondaires sont constituées par les parois intérieures des pas de brosses.

4. Procédé selon l'une des revendications 1 à 3, caractérisé en ce que l'agent de traitement est appliqué sur les volumes de particules élémentaires, dans la première partie de leur trajet de translation.

5. Procédé selon l'une des revendications 1 à 4, caractérisé en ce que l'agent de traitement est un liquide.

6. Procédé selon l'une des revendications 1 à 5, caractérisé en ce que l'agent de traitement est une poudre.

7. Procédé selon l'une des revendications 1 à 6, caractérisé en ce que, à la sortie du traitement, les particules sont soumises à un séchage.

8. Procédé selon l'une des revendications 1 à 7, caractérisé en ce que les particules sont des semences.

9. Dispositif pour le traitement de particules au moyen d'un agent de traitement, caractérisé en ce qu'il comprend un tambour longitudinal rotatif à l'aide d'un moteur autour d'un axe sensiblement horizontal, dans lequel progressent d'un bout à l'autre les particules amenées en continu à l'entrée du tambour par un dispositif distributeur et dans l'espace duquel se trouvent:
a) au moins deux hélices rotatives autour d'axes parallèles à celui du tambour, avec des moyens pour assurer qu'au moins l'une tournant dans le même sens que le tambour et les autres en sens contraire, dont l'une, la plus proche de la première hélice, contribue à former avec celles ci des volumes élémentaires de particules,
b) au mois une rampe d'alimentation dont l'axe est sensiblement horizontal et parallèle à celui du tambour située au dessus du plan des axes des hélices longitudinales, et associée à au moins un répartiteur de l'agent de traitement sur les particules en mouvement, sur toute la zone de traitement du tambour.

10. Dispositif selon la revendication 9, caractérisé en ce que chacune des hélices est une brosse hélicoïdale.

11. Dispositif selon l'une des revendications 9 et 10, caractérisé en ce que le tambour est perforé.

12. Dispositif selon l'une des revendications 9 à 11, caractérisé en ce que le tambour est cylindrique.

13. Dispositif selon l'une des revendications 9 à 11, caractérisé en ce que le tambour est polygonal.

14. Dispositif selon l'une des revendications 9 à 13, caractérisé en ce que le répartiteur de l'agent de traitement est une buse de pulvérisation.

15. Dispositif selon l'une des revendications 9 à 13, caractérisé en ce que le répartiteur de l'agent de traitement est un distributeur de poudre;

16. Dispositif selon l'une des revendications 9 à 15, caractérisé en ce que, à la sortie du tambour, se trouve un dispositif de transport en continu pour évacuer les particules traitées.

17. Dispositif selon la revendication 16, caractérisé en ce que le dispositif de transport est associé à une unité de séchage des particules traitées.

## Claims

1. Process for continuous surface treatment of particles in motion by means of a treatment agent supplied simultaneously and continuously, characterised in that:
- the particles are distributed in the form of elemental volumes principally in continuous piston-type longitudinal translational motion, the particles of each volume being subjected furthermore, and simultaneously, to at least one rotational motion in a direction transverse to that of the principal motion, and at least one vertical motion in an elemental space all of whose walls in contact with the particles are continuously moving, the space being defined by at least one principal cylindrical or polygonal wall of a drum in slow rotation around a longitudinal axis and at least two secondary walls moving rectilinearly in the direction of the principal translational motion, the secondary walls consisting, in pairs, of two successive homologous parts of two screws with axes parallel to that of the principal rotating wall, the two screws rotating in opposite directions.

2. Process according to claim 1, characterised in that the treatment agent is supplied by spraying.

3. Process according to either of claims 1 and 2, characterised in that the secondary walls consist, at the lower walls, of lengths of brushes.

4. Process according to one of claims 1 to 3, characterised in that the treatment agent is applied onto the elemental particle volumes, in the first part of their translational travel.

5. Process according to one of claims 1 to 4, characterised in that the treatment agent is a liquid.

6. Process according to one of claims 1 to 5, characterised in that the treatment agent is a powder.

7. Process according to one of claims 1 to 6, characterised in that, on exit from the treatment, the particles are subjected to a drying.

8. Process according to one of claims 1 to 7, characterised in that the particles are seeds.

9. Device for treating particles by means of a treatment agent, characterised in that it comprises a longitudinal drum rotating by means of a motor around a substantially horizontal axis, in which the particles continuously supplied at the entry of the drum by a dispenser device progress from one end to the other, and within the space of which there are:
a) at least two screws rotating around axes parallel to that of the drum, with means to ensure that at least one rotating in the same direction as the drum and the others in the opposite direction, one of which, the nearest to the first screw, contributes to forming elementary particle volumes with them,
b) at least one feeding pipe, whose axis is substantially horizontal and parallel to that of the drum, situated above the plane of the axes of the longitudinal screws and associated with at least one distributor of the treatment agent onto the particles in motion, over the whole treatment zone of the drum.

10. Device according to claim 9, characterised in that each of the screws is a helicoidal brush.

11. Device according to either of claims 9 and 10, characterised in that the drum is perforated.

12. Device according to one of claims 9 to 11, characterised in that the drum is cylindrical.

13. Device according to one of claims 9 to 11, characterised in that the drum is polygonal.

14. Device according to one of claims 9 to 13, characterised in that the distributor of the treatment agent is a spray nozzle.

15. Device according to one of claims 9 to 13, characterised in that the distributor of the treatment agent is a powder dispenser.

16. Device according to one of claims 9 to 15, characterised in that, at the exit from the drum, there is a continuous-transportation device for removing the treated particles.

17. Device according to claim 16, characterised in that the transportation device is associated with a unit for drying the treated particles.

## Patentansprüche

1. Verfahren zur kontinuierlichen Behandlung der Oberfläche von fortbewegten befindlichen Partikeln mit einem Behandlungsmittel, das gleichzeitig und kontinuierlich zugeführt wird, dadurch gekennzeichnet, daß
die Partikel in Form von Elementarvolumina aufgeteilt sind, deren Hauptbewegung aus einer longitudinalen Translationsbewegung besteht, die kontinuierlich und kolbenförmig ist, wobei die Partikel jedes Volumens zusätzlich und gleichzeitig mindestens einer Rotationsbewegung in transversaler Richtung zur Richtung der Hauptbewegung und mindestens einer Vertikalbewegung in einem Elementarraum unterzogen werden, dessen gesamte sich mit den Partikeln in Kontakt befindlichen Wände kontinuierlich in Bewegung sind, wobei der Raum durch mindestens eine zylindrische oder polygonale Hauptwand einer Trommel, die sich in langsamer Rotation um eine longitudinale Achse befindet, und mindestens zwei Nebenwände, die sich geradlinig in Richtung der translatorischen Hauptbewegung fortbewegen, definiert ist, wobei die Nebenwände paarweise aus zwei aufeinanderfolgenden, homologen Teilen zweier Helices mit Achsen parallel zur Achse der rotierenden Hauptwand bestehen, wobei sich die beiden Helices in entgegengesetzter Richtung drehen.

2. Verfahren nach Anspruch 1, dadurch gekennzeichnet daß die Zufuhr des Behandlungsmittels durch Zerstäubung erfolgt.

3. Verfahren nach einem der Ansprüche 1 und 2, dadurch gekennzeichnet, daß die Nebenwände aus den inneren Wänden der Ganghöhen von Bürsten bestehen.

4. Verfahren nach einem der Ansprüche 1 bis 3, dadurch gekennzeichnet, daß das Behandlungsmittel auf die aus den Partikeln bestehenden Elementarvolumina im ersten Teil ihrer Translationsstrecke aufgebracht wird.

5. Verfahren nach einem der Ansprüche 1 bis 4, dadurch gekennzeichnet, daß das Behandlungsmittel eine Flüssigkeit ist.

6. Verfahren nach einem der Ansprüche 1 bis 5, dadurch gekennzeichnet, daß das Behandlungsmittel ein Pulver ist.

7. Verfahren nach einem der Ansprüche 1 bis 6, dadurch gekennzeichnet, daß die Partikel am Ende Behandlung einer Trocknung unterzogen werden.

8. Verfahren nach einem der Ansprüche 1 bis 7, dadurch gekennzeichnet, daß es sich bei den Partikeln um ein Saatgut handelt.

9. Vorrichtung für die Behandlung von Partikeln mit einem Behandlungsmittel,
dadurch gekennzeichnet, daß
sie eine longitudinal angeordnete Trommel, die mit Hilfe eines Motors um eine im wesentlichen horizontal angeordnete Achse rotierbar ist, umfaßt, in der sich vom einen Ende zum anderen Ende die am Einlaß der Trommel durch eine Verteilervorrichtung zugeführten Partikel fortbewegen und in deren Raum sich befinden:
a) mindestens zwei Helices, die um Achsen parallel zur Achse der Trommel rotierbar sind, mit Mitteln, die gewährleisten, daß sich mindestens eine Helix in gleicher Richtung wie die Trommel dreht und sich die anderen Helices in entgegengesetzter Richtung drehen, von denen die der ersten Helix am nächsten angeordnete Helix zur Bildung der aus den Partikeln bestehenden Elementarvolumina mit diesen beiträgt,
b) mindestens eine Zufuhrrampe, deren Achse im wesentlichen horizontal und parallel zur Achse der Trommel angeordnet ist, wobei die Zufuhrrampe oberhalb der Ebene der Achsen der longitudinalen Helices gelegen ist und mit mindestens einem Verteiler zur Verteilung des Behandlungsmittels auf die bewegten Partikel im gesamten Behandlungsbereich der Trommel kombiniert ist.

10. Vorrichtung nach Anspruch 9, dadurch gekennzeichnet, daß jede Helix eine schraubenförmige Bürste ist.

11. Vorrichtung nach einem der Ansprüche 9 und 10, dadurch gekennzeichnet, daß die Trommel gelocht ist.

12. Vorrichtung nach einem der Ansprüche 9 bis 11, dadurch gekennzeichnet, daß die Trommel zylindrisch ist.

13. Vorrichtung nach einem der Ansprüche 9 bis 11, dadurch gekennzeichnet, daß die Trommel polygonal ist.

14. Vorrichtung nach einem der Ansprüche 9 bis 13, dadurch gekennzeichnet, daß der Verteiler für das Behandlungsmittel eine Zerstäubungsdüse ist.

15. Vorrichtung nach einem der Ansprüche 9 bis 13, dadurch gekennzeichnet, daß der Verteiler für das Behandlungsmittel ein Pulververteiler ist.

16. Vorrichtung nach einem der Ansprüche 9 bis 15, dadurch gekennzeichnet, daß sich am Auslaß der Trommel eine Transportvorrichtung für die kontinuierliche Entfernung der behandelten Partikel befindet.

17. Vorrichtung nach Anspruch 16, dadurch gekennzeichnet, daß die Transportvorrichtung mit einer Einheit zur Trocknung der behandelten Partikel kombiniert ist.
